# EUROPEAN PATENT APPLICATION

(11) **EP 1 076 477 A2**
(43) Date of publication of application: **14.02.2001**
(21) Application number: 00306874.9
(22) Date of filing: 11.08.2000
(51) Int. Cl.: H05B 37/02

(54) **Solar cell for lighting purpose**

(30) Priority: 13.08.1999 US 373654; 18.10.1999 US 421317
(71) Applicant: Yang, Tai-Her, Si-Hu Town, Dzan-Hwa (TW); Chen, Yang, Sanchung City, Taipei Hsien (TW)
(72) Inventor: Yang, Tai-Her, Si-Hu Town, Dzan-Hwa (TW); Chen, Yang, Sanchung City, Taipei Hsien (TW)
(74) Representative: Pratt, David Martin

(57) **Abstract**

Design of a Solar cell and Load Interactive Control System for lighting applications, whereby the output status of the solar cell responsive to incident light, present or absent, forms the basis for detection of ambient brightness, that in turn facilitates control of the battery in relation to actual operation of lighting implements, such that the battery will accept charging without releasing any output when the solar cell is active in a light-induced output state; but will revert to an output releasing, but charging suspended condition when the solar cell is not receiving any incident light, and that accompanies with a non-outputting high impedance state.

## Description

### BACKGROUND OF THE INVENTION:

### (a) Field of the Invention

Design of solar cell for lighting purpose and loading interactive control system, whereof the solar cell light recipient output state expressed in voltage or current serves as the basis for detection of the brightness of surroundings, and that in turn serving to control operation of the lamp by the battery, such that, while the solar cell is in a light recipient output state, the battery instead remains in a charging recipient but non-output condition which, however, reverts to an output-dominant, charging-suspended state, when the solar cell switches to a non lighting recipient, non output, high impedance state.

### (b) Description of the Prior Art:

By and large a traditional solar cell lighting device works so that the battery is charged when the solar cell receives incoming light, when the solar cell is not receiving light an ambience brightness detection ckt. will intervene instead to drive the battery into supplying power to activate lighting lamps or other loads once the surroundings turns darker to a predetermined level.

### SUMMARY OF THE INVENTION

The primary object of the invention, therefore, is to provide a more advanced design of solar cell for lighting purpose supplemented with a load control system, whereof the solar cell light recipient output state serves as the basis for detection of the brightness of surroundings, and that in turn serving to control operation of the lamp by the battery, so that the solar cell in addition to being the source of power supply, by the output state of its output voltage or output current, is also able to detect ambience brightness, thus achieving the multiple goal of ckt. simplification, upgrading of reliability as well as cost savings by reason of the omission of a specific ambience darkness detector otherwise necessitated.

### BRIEF DESCRIPTION OF THE DRAWINGS:

Fig. 1 illustrates a Solar Cell Output Voltage Detection Ckt. executed in the first embodiment according to the invention;
Fig. 2 illustrates a Solar Cell Output Voltage Detection Ckt. executed in the second embodiment according to the invention;
Fig. 3 illustrates a Solar Cell Output Current Detection Ckt. forming part of the invention system in the first embodiment;
Fig. 4 illustrates a Solar Cell Output Current Detection Ckt. forming part of the invention system in the second embodiment; and
Fig. 5 illustrates a Solar Cell Output Current Detection Ckt. forming part of the invention system in the third embodiment.

### DETAILED DESCRIPTION OF THE PREFERRED EMBODIMENTS

According to the invention, detection of the working condition of the Solar Cell can be prosecuted by checking currents or alternatively checking voltage, and the key ckts. employed, improvement features, other functioning, objects of the invention are described in further detail below:

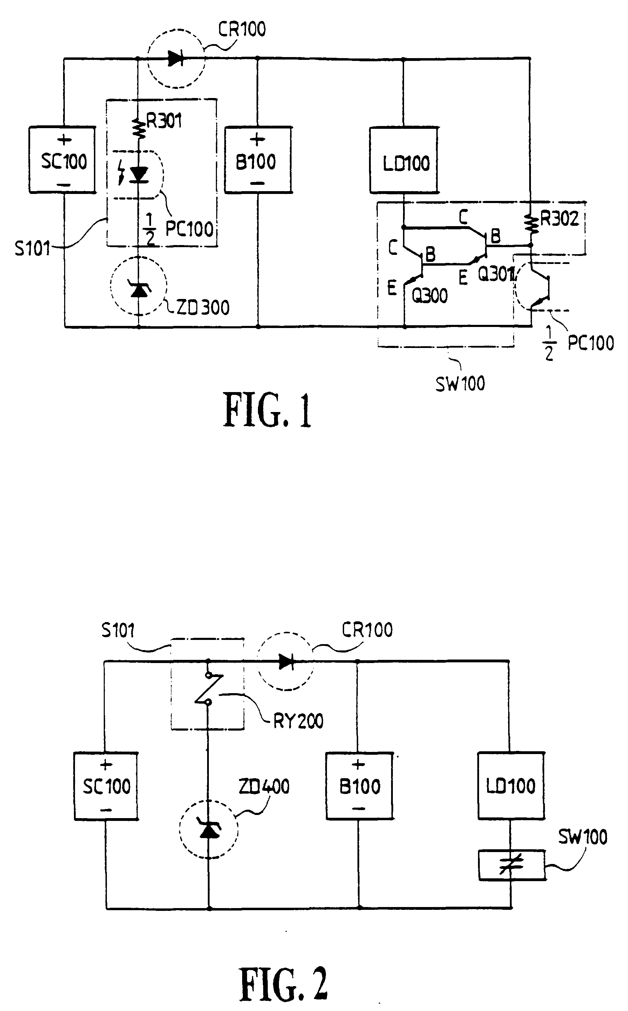

Referring to Fig. 1, the invention Solar Cell Output Voltage Detection System executed in one embodiment, of which the essential structural components and functioning, specifications are given below:
-- Solar Cell SC100:comprising varies solar cells, be it single crystal, multiple crystal or amorphous, capable of converting optic energy into electric power serving to charge the Battery;
-- Battery B100: comprising cells or batteries capable of charging and discharging twice respectively, more specifically, to accept charging coming from Solar Cell SC100, and to discharge as output to the Load LD100;
-- Output Switch SW100: comprising solid state output switch Q300, Q301, including single crystal or Darlingto Switching Devices composed of NPN or PNP switching crystals or MOSFET, a control resistor R302 being connected way between the power supply to which its Collector C is attached and the Control Base B so that the solid state switch is set to a normally conductive state, on a photo-coupler PC100 in parallel across the Base B of Q301 and the Emitter E of Q300 there is an output end in the form of a photo-controlled crystal, once the output voltage occasioned by the Solar Cell on exposure to a light source exceeds the working voltage of a photo-emitting diode on the input end of the photo-coupler PC100, the photo-emitting diode on the part of photo-coupler PC100 will irradiate so that the crystal on the output end is set conductive, that in turn setting both solid state switches Q300 and Q301 to cut-off state, whereupon Load LD100 remains non-conductive, but then Solar Cell SC100 will charge the Battery B100 in the meantime, on the contrary while Solar Cell SC100 is in a state of receiving light of reduced intensity or not receiving any light at all, the output voltage will reduce or eventually become reduced to zero so that the photo-emitting diode on the output end of the photo-coupler PC100 suspends irradiation, by contrast, the photo-crystal on the output end of the photo-coupler PC100 is cut off, with the result that both solid state switches Q300 and Q301 are brought into conduction, concurrently Battery BAT100 becomes conductive to the Load LD100; in addition, on the premise that control logic remains unchanged, the output switch SW100 may be adapted to further control an additionally incorporated solid state or electromechanical switch of a greater switching power so as to manifest itself in a normally open state to the Load LD100 when the Solar Cell SC100 is receiving light, or else a normally closed state when said Solar Cell SC100 is not receiving light;
-- Solar Cell Output Voltage Detection Ckt. S101: in series between the input end of a photo-emitting diode on the photo-coupler PC100 and the current limiting resistor R301, the above in parallel with both output ends across the solar cell SC100, to control the output switch SW100, and that followed by control of the Battery respecting the operating status of the Load LD100, by detecting the output voltage of the Solar Cell SC100; the operation rationale being that as the charging voltage occasioned by the charging or Battery B100 due to exposure of Solar Cell SC100 to incident light exceeds a predetermined value, the Solar Cell Output Voltage Detection Ckt. S101 will drive the output switch SW100 so that the Battery B100 is cut off from the load(OFF); on the contrary, when the solar cell SC100 is not receiving light or the light to which it is exposed has turned down such that the charging voltage due to the SC100 upon the Battery B100 has reduced to a level below a predetermined one or else reduced to zero, then the Solar Cell Output Voltage Detection Ckt. S101 will drive the Output Switch SW100 to conductive status, so that the Battery B100 manifests itself in an ON, that is feeding status relative to the Load LD100; said Solar Cell Output Voltage Detection Ckt. S101 and the Output Switch SW100 being integrally or separately structured;
--Blocking Diode CR100:facilitating passage of charging current way between the Solar Cell SC100 and the Battery B100 in a forward direction, but checking relux therebetween, which may be installed or not installed as required;
--Zener Diode ZD300: for series interpolation with the photo-emitting diode on the input end of the photo-coupler PC100 in order to harmonize interrelationship between voltages prevailing at the photo-emitting diode at the input end of the photo-coupler PC100, the Solar Cell SC100 and the Battery B100.

Once the voltage of the solar cell rises to a predetermined value the photo-emitting diode at the input end of the photo-coupler PC100 will irradiate, in an execution without the intervention of a blocking diode, in the event the voltage of the solar cell goes down or eventually is reduced to zero, the photo-emitting diode at the input end of the photo-coupler PC100, bearing Battery B100 voltage, 1. still remains non-irradiating, 2. when in subsequent discharging course such that the Battery B100 voltage goes down a little bit to a predetermined value, the photo-emitting diode at the input end of the photo-coupler PC100 will abstain from illumination, and the output switch SW100 tuned closed, whereupon potential stored in the Battery B100 is fed as output to the Load;
-- LoadLD100: essentially in the form of optic energy converted from various electric power, but also available in the form of thermal, chemical, or acoustic energy transformed way from electric power, which may be operated autonomously or artificially by the provision of relevant control means.

Another embodiment of the invention executed in the form of a Solar Cell Output Voltage Detection Ckt. System is illustrated in Fig. 2, and comprises essentially:
-- Solar Cell SC100: comprising a number of solar cells, be it single crystal, multiple crystal or amorphous, capable of converting optic power into electric power, more specifically serving to convert solar energy into electric power, to be charged into the Battery eventually;
-- Battery B100: comprising varied cells or storage capacitors capable of charging or discharging for twice, more specifically meant for receiving charging from solar cell SC100 and for discharging as output to the Load LD100;
--Output Switch SW100: comprising electromechanical relays, serving to drive the Battery B100 into rendering output to or into suspending from output to the load;also, under the premise that ckt. control logic remains unchanged, it may be adapted to control additionally a solid state or electromechanical switching assembly or a greater switching power to be installed additionally, so as to manifest itself in a normally open state with respect to the Load LD100 when it is receiving light, or else in a normally closed state with respect to the same Load LD100 when it is not receiving any light incident;
-- Solar Cell Output Voltage Detection Ckt. S101: comprising Relay RY200, whereof the drive coil is in parallel across both ends of the Solar Cell SC100, serving to drive the Output Switch SW100 which is normally closed (NC), by detecting the output voltage of SC100, so as to control in turn the operation status of the Battery in relation to the Load LD100; the operation rationale being that whenever the charging voltage due to solar cell SC100 on exposure to light incident upon the Battery B100 exceeds a predetermined value, the Solar Cell Output Voltage Detection Ckt. S101 will drive the Output Control Switch SW100 so that the Battery B100 is cut off from the Load; whereas while the Solar Cell is not receiving any light incident or the light incident to which it is exposed has diminished somehow such that the charging voltage bearing from the solar cell SC100 upon the Battery B100 is reduced to a level below a predetermined one or else to zero, the solar cell output voltage detection ckt. S101 will drive the Output Switch SW100 to conduction, to that the Battery B101 manifests itself in an ON state feeding output to the load LD100; said solar cell output voltage detection ckt. S101 and output Switch SW100 being integrated together or alternatively of separate structure;
--Blocking Diode CR100: in forward series spanning between the solar cell SC100 and the Battery B100 to accommodate passage of charging currents, but check reflux, which may be installed or not per ckt. requirements;
-- Zener Diode ZD400: in series with Relay RY200 to harmonize the Voltage Rapport between Relay RY200, Solar Cell SC100 and Battery B100; such that,
   once the voltage of the solar cell rises to a predetermined level, Relay RY200 will make it, when the solar cell voltage drops low or eventually down to zero without the intervention of a blocking diode, Relay RY200, being acted upon by Battery B100 voltage, 1. will still react to skip; 2. or else maintain the 'make', that is, being sucked, when the Battery B100 exhibits a higher voltage, only to skip when later on the discharging takes place such that Battery B100 voltage comes down somewhat to said predetermined level, driving output switch SW100 to closure, as a result, electric potential stored in the Battery B100 is fed as output to the load;
-- LoadLD100: comprising essentially loads in the form of optic energy converted from various electric power, or alternatively mechanic, thermal, chemical or acoustic energy converted from electric power, the load may be of autonomous operation mode or alternatively artificially controlled mode, and structured accordingly.

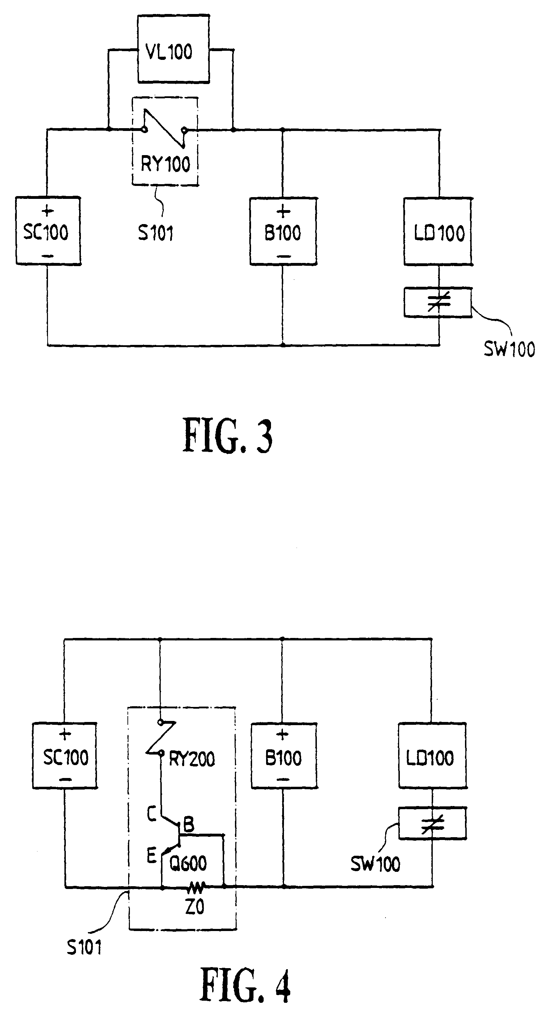

Fig. 3 illustrates a further example of the invention in the context of a solar cell output current detection ckt., which comprises essentially;
-- Solar Cell SC100: comprising single crystal, multiple crystal or amorphous something capable of converting optic energy into electric power, serving to convert solar energy into electric power to charge the Battery;
-- Battery B100: comprising cell or storage capacitor capable of at least charging and discharging twice, serving to accept charging from solar cell SC100, and to discharge as output to Load LD100;
-- Solar Cell Output Current Detection Device RY100 and Output Switch SW100 controlled thereby; being mechanic devices, RY100 being a current detection relay to detect the solar cell current output status, by which to drive the output switch SW100, and that in turn to control the operation status of the Battery in relation to the Load LD100, the Output Switch SW100 serving to drive the Battery B100 to effect an output to, or to suspend an output from the load; whereof the operation rationale is such that when the charging current owing to exposure of solar cell SC100 to light incident, into the Battery B100 is greater than that which makes the Current Detector RY100 to a sucking status, then the Current Detector RY100 will function and drive the Output Switch SW100 so that the Battery B100 is broken off the load; on the contrary when the Solar Cell is not receiving light incident, or the light incident upon same has turned down to the extent such that the current charging upon the Battery B100 way from the Solar Cell SC100 is less than that which suffices to skip the Current Detector RY100, the Current Detector RY100 will then drive the Output Switch SW100 to conduction, so that the Battery B100 becomes established in an ON state in relation to and feeding output to the Load LD100; said Current Detector RY100 and Output Switch SW100 being integrated together or of separate structure, as preferred;
--Output Switch SW100: composed of mechanical or solid state electronic ckts., serving to drive the Battery B100 into effecting an output to or withdrawing output from the load; also under the premise that the circuit control logic remains unchanged, the Output Switch SW100 may be adapted to further control a solid state or mechanical switch means provided in addition, and of a greater switching capability so as to manifest itself normally open in relation to the Load LD100 when the solar cell SC100 is receiving light incident, but normally closed instead when it is otherwise;
-- Current Split Voltage Limiter VL100: composed of a zener diode or otherwise diode exhibiting a forward bias, other solid state ckt. or mechanical devices, serving to establish an upper limit to the voltage drop formed across both ends of the Current Detector RY100 when the current charging upon the Battery B100 way from the Solar Cell SC100 exceeds a predetermined level, while exhibiting current splitting function at the same time; said Current Split Voltage Limiter VL100 may be installed independently or integral with the Current Detector RY100, and may also be dispensed with where the need does not exist;
-- Load LD100: essentially that which is converted into optic energy from various electric power, or alternatively that which is converted from electric power into mechanic, thermal, chemical or acoustic energy which can be either autonomously operated or artificially operated by relevant installation. In the illustration of a Solar Cell Output Current Detection Ckt. embodied in one example, a second one, given in Fig. 4, it is seen to comprise:
-- Solar Cell SC100: being single crystal, multiple crystal or amorphous something capable of converting optic energy into electric power, serving to convert solar energy into electric power to charge the Battery;
-- Battery B100: composed of cell or battery capable of charging or discharging for at least twice, meant to accept charging by the solar cell SC100 and to discharge as output fed to the Load LD100;
-- Solar Cell Output Current Testing Impedance ZO: composed of resistors or other elements having linear or non-linear characteristic impedances for serial connection way between solar cell SC100 and Battery B100 on the one hand, way between the Base B of switching crystal Q100 and the Emitter E of same crystal, the Collector C and Emitter E of the switching crystal Q100, firstly made in series with Relay RY200, then altogether paralleling across both ends of solar cell SC100; so that , when charging current passes due to electric power produced by the exposure of Solar Cell SC100 to light incident, a corresponding voltage drop will be produced VBE across both ends of the current testing impedance ZO, by which to drive the switching crystal Q100 into conduction, so that Relay RY200 is made(sucked) and the Output Switch SW100 is brought to an open ckt condition; while on the contrary when the light incident upon the solar cell SC100 is dwindled or when the solar cell is not being exposed to light incident the charging current will dwindle in like measure or suspend, such that the voltage drop VBE across the current testing impedance ZO is reduced or diminished eventually to zero, thereby cutting off the switching crystal, while the Relay RY200 in series with the switching crystal Q100 skips so that the output switch SW100 controlled thereby is set to closure, resulting eventually in an output of electric power coming from the Battery B100 to the Load LD100;

Afore-mentioned Relay RY200 and output switch SW100 being integrated together or separately structured;
-- Output Switch SW100: comprising electro-mechanic or solid state electronic ckt., serving to drive the Battery B100 into effecting an output to, or alternatively an suspension of output from the load; in addition, under the premise that the ckt. control logic remains unchanged, the same output switch SW100 may be adapted to further control a solid state or mechanical switching means of a greater switching capability to be provided additionally, so as to manifest itself in a normally open ckt. condition in relation to the Load LD100 when the solar cell SC100 is receiving light incident, or alternatively in a normally closed ckt. condition when the solar cell SC100 is not receiving any light incident;
-- Split Current Voltage Limiter VL100: in the form of a zener diode a forwardly biased diode or other solid state electronic ckt. or device, to establish an upper limit to the voltage drop prevailing across both ends of the current testing impedance ZO when the current charged to the Battery B100 way from the solar cell SC100 exceeds a predetermined level, thereby accounting for a current splitting effect; such a current splitting voltage limiter VL100 can be installed independently or integral with the current testing device RY100, or still be dispensed with where there does not exist a need for it;

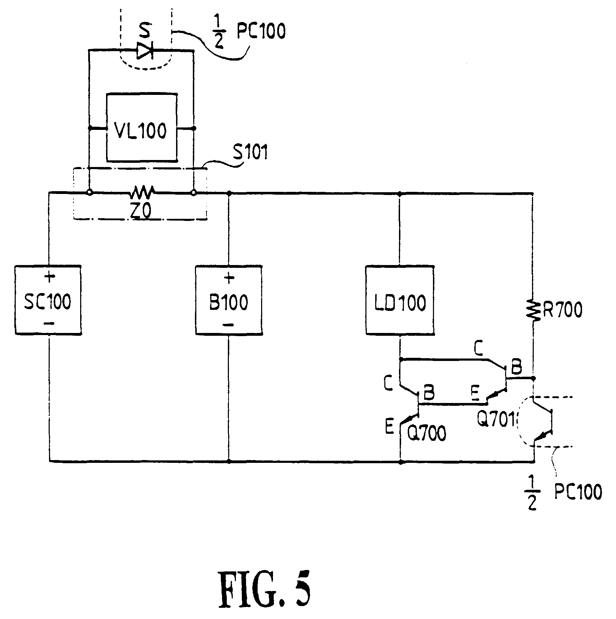

In Fig. 5, an illustration of a Solar Cell Output Current Detector Ckt. System executed as a third example of the invention, it is seen to comprise:
-- Solar Cell SC100: one which is either single crystal, multiple crystal or amorphous something capable of converting optic energy into electric power, for converting solar energy into electric power to charge the Battery;
-- Battery B100: composed of one of a variety of cell or storage capacitor capable of charging or discharging at least twice, meant to accept charging by the solar cell SC100, and to discharge as output fed to the Load LD100;
--Solar Cell Output Current Testing Impedance ZO: composed of resistor or other elements having linear or non-linear characteristic impedances, in series way between the solar cell SC100 and the Battery B100, with both ends paralleled across the input terminals of a photo-emitting diode which is part of the photo-coupler PC100;
-- Output Switch SW100: in the form of solid state output switching device Q700, Q701, incorporating single crystal or Darlingto switch ckt. composed of NPN or PNP switching chips or MOSFET, with a control resistor R700 being in series way between the power supply to which the collector C is attached and the Control Base B so that the solid state switch is set normally conductive, way between the Base B of Q701 and the Emitter E of Q700 there is paralleled a photo-coupler PC100 integral with the output terminal of a photo-controlled transistor; when the Solar Cell generates upon exposure to light incident, the output current will pass the current testing impedance ZO and develop a voltage drop across both ends of said impedance ZO, once said voltage drop exceeds the working voltage of the photo-emitting diode on the input end of the photo-coupler PC100, said photo-emitting diode will illuminate to render the transistor on the output end conductive, that in turn compelling the solid state switch Q700 and Q701 into cutoff state, whereupon the Load LD100 remains non-conductive, meantime solar cell SC100 charges with respect to the Battery B100; whereas on the contrary, when the light incident upon the solar cell SC100 is dwindled or that it becomes blind, current passing the current testing impedance ZO will then get diminished or reduced to zero, meantime the voltage drop developed across both ends of the current testing impedance will likewise downgrade or become eventually reduced to zero, as a result the photo-emitting diode on the output terminal of the photo-coupler PC100 abstains from illumination, and that with the effect that the photo transistor on the same output end of the photo-coupler PC100 gets cutoff, to follow that, the solid state switch Q700 and Q701 are brought in conduction, the Battery B100 in communication with the Load LD100; in addition, under the premise that the ckt. control logic remains unchanged, the output switch SW100 may be adapted to assume control of a solid state or mechanical switching means of a greater switching capability provided additionally so as to manifest itself in a normally open ckt. condition relative to the load when the solar cell SC100 is receiving light incident, or alternatively in a normally open ckt. condition relative to the same Load LD100 when the solar cell SC100 is not receiving any light incident;
-- Current Splitting Voltage Limiter VL100: in the form of a zener diode, or a diode having forward bias, or other solid state electronic ckt. or mechanical device, serving to establish an upper limit to the voltage drop established across both ends of the current testing impedance ZO when the current being charged to the Battery B100 way from the solar cell SC100 exceeds a predetermined value, meantime exhibiting a current splitting effect; the current splitting voltage limiter VL100 being an independent installation or structurally integral with the Current Testing Impedance ZO, or still it may be omitted if not being a requisite in the ckts;
-- Load LD100: being such one as to being able to convert a variety of electric power into optic energy, but equally capable of converting electric power into thermal, chemical, mechanical, or acoustic energy, either autonomously operated or artificially operated by relevant control and switching means.

## Claims

1. Design of solar cell for lighting purpose and loading interactive control system, whereof the solar cell light recipient output state serves as the basis for detection of the brightness of surroundings, and that in turn serving to control operation of the lamp by the battery, such that, while the solar cell is in a light recipient output state, the battery instead remains in a charging recipient but non-output condition which, however, reverts to an output-dominant, charging-suspended state, when the solar cell switches to a non lighting recipient, non output, high impedance state, whereof the schema comprises:
-- Solar Cell SC100: comprising varies solar cells, be it single crystal, multiple crystal or amorphous, capable of converting optic energy into electric power serving to charge the Battery;
-- Battery B100: comprising cells or batteries capable of charging and discharging twice respectively, more specifically, to accept charging coming from Solar Cell SC100, and to discharge as output to the Load LD100;
-- Output Switch SW100: comprising solid state output switch Q300, Q301, including single crystal or Darlingto Switching Devices composed of NPN or PNP switching crystals or MOSFET, a control resistor R302 being connected way between the power supply to which its Collector C is attached and the Control Base B so that the solid state switch is set to a normally conductive state, on a photo-coupler PC100 in parallel across the Base B of Q301 and the Emitter E of Q300 there is an output end in the form of a photo-controlled crystal, once the output voltage occasioned by the Solar Cell on exposure to a light source exceeds the working voltage of a photo-emitting diode on the input end of the photo-coupler PC100, the photo-emitting diode on the part of photo-coupler PC100 will irradiate so that the crystal on the output end is set conductive, that in turn setting both solid state switches Q300 and Q301 to cut-off state, whereupon Load LD100 remains non-conductive, but then Solar Cell SC100 will charge the Battery B100 in the meantime, on the contrary while Solar Cell SC100 is in a state of receiving light of reduced intensity or not receiving any light at all, the output voltage will reduce or eventually become reduced to zero so that the photo-emitting diode on the output end of the photo-coupler PC100 suspends irradiation, by contrast, the photo-crystal on the output end of the photo-coupler PC100 is cut off, with the result that both solid state switches Q300 and Q301 are brought into conduction, concurrently Battery BAT100 becomes conductive to the Load LD100; in addition, on the premise that control logic remains unchanged, the output switch SW100 may be adapted to further control an additionally incorporated solid state or electromechanical switch of a greater switching power so as to manifest itself in a normally open state to the Load LD100 when the Solar Cell SC100 is receiving light, or else a normally closed state when said Solar Cell SC100 is not receiving light;
-- Solar Cell Output Voltage Detection Ckt. S101: in series between the input end of a photo-emitting diode on the photo-coupler PC100 and the current limiting resistor R301, the above in parallel with both output ends across the solar cell SC100, to control the output switch SW100, and that followed by control of the Battery respecting the operating status of the Load LD100, by detecting the output voltage of the Solar Cell SC100; the operation rationale being that as the charging voltage occasioned by the charging or Battery B100 due to exposure of Solar Cell SC100 to incident light exceeds a predetermined value, the Solar Cell Output Voltage Detection Ckt. S101 will drive the output switch SW100 so that the Battery B100 is cut off from the load(OFF); on the contrary, when the solar cell SC100 is not receiving light or the light to which it is exposed has turned down such that the charging voltage due to the SC100 upon the Battery B100 has reduced to a level below a predetermined one or else reduced to zero, then the Solar Cell Output Voltage Detection Ckt. S101 will drive the Output Switch SW100 to conductive status, so that the Battery B100 manifests itself in an ON, that is feeding status relative to the Load LD100; said Solar Cell Output Voltage Detection Ckt. S101 and the Output Switch SW100 being integrally or separately structured;
--Blocking Diode CR100:facilitating passage of charging current way between the Solar Cell SC100 and the Battery B100 in a forward direction, but checking relux therebetween, which may be installed or not installed as required;
--Zener Diode ZD300: for series interpolation with the photo-emitting diode on the input end of the photo-coupler PC100 in order to harmonize interrelationship between voltages prevailing at the photo-emitting diode at the input end of the photo-coupler PC100, the Solar Cell SC100 and the Battery B100.
Once the voltage of the solar cell rises to a predetermined value the photo-emitting diode at the input end of the photo-coupler PC100 will irradiate, in an execution without the intervention of a blocking diode, in the event the voltage of the solar cell goes down or eventually is reduced to zero, the photo-emitting diode at the input end of the photo-coupler PC100, bearing Battery B100 voltage, 1. still remains non-irradiating, 2. when in subsequent discharging course such that the Battery B100 voltage goes down a little bit to a predetermined value, the photo-emitting diode at the input end of the photo-coupler PC100 will abstain from illumination, and the output switch SW100 tuned closed, whereupon potential stored in the Battery B100 is fed as output to the Load;
-- Load LD100: essentially in the form of optic energy converted from various electric power, but also available in the form of thermal, chemical, or acoustic energy transformed way from electric power, which may be operated autonomously or artificially by the provision of relevant control means.

2. Solar Cell and Load Interactive Control System for application in lighting facilities according to Claim 1, whereof the schema comprises:
-- Solar Cell SC100: comprising a number of solar cells, be it single crystal, multiple crystal or amorphous, capable of converting optic power into electric power, more specifically serving to convert solar energy into electric power, to be charged into the Battery eventually;
-- Battery B100: comprising varied cells or storage capacitors capable of charging or discharging for twice, more specifically meant for receiving charging from solar cell SC100 and for discharging as output to the Load LD100;
--Output Switch SW100: comprising electromechanical relays, serving to drive the Battery B100 into rendering output to or into suspending from output to the load; also, under the premise that ckt. control logic remains unchanged, it may be adapted to control additionally a solid state or electromechanical switching assembly or a greater switching power to be installed additionally , so as to manifest itself in a normally open state with respect to the Load LD100 when it is receiving light, or else in a normally closed state with respect to the same Load LD100 when it is not receiving any light incident;
-- Solar Cell Output Voltage Detection Ckt. S101: comprising Relay RY200, whereof the drive coil is in parallel across both ends of the Solar Cell SC100, serving to drive the Output Switch SW100 which is normally closed (NC), by detecting the output voltage of SC100, so as to control in turn the operation status of the Battery in relation to the Load LD100; the operation rationale being that whenever the charging voltage due to solar cell SC100 on exposure to light incident upon the Battery B100 exceeds a predetermined value, the Solar Cell Output Voltage Detection Ckt. S101 will drive the Output Control Switch SW100 so that the Battery B100 is cut off from the Load; whereas while the Solar Cell is not receiving any light incident or the light incident to which it is exposed has diminished somehow such that the charging voltage bearing from the solar cell SC100 upon the Battery B100 is reduced to a level below a predetermined one or else to zero, the solar cell output voltage detection ckt. S101 will drive the Output Switch SW100 to conduction, to that the Battery B101 manifests itself in an ON state feeding output to the load LD100; said solar cell output voltage detection ckt. S101 and output Switch SW100 being integrated together or alternatively of separate structure;
--Blocking Diode CR100: in forward series spanning between the solar cell SC100 and the Battery B100 to accommodate passage of charging currents, but check reflux, which may be installed or not per ckt. requirements;
-- Zener Diode ZD400: in series with Relay RY200 to harmonize the Voltage Rapport between Relay RY200, Solar Cell SC100 and Battery B100; such that,
once the voltage of the solar cell rises to a predetermined level, Relay RY200 will make it, when the solar cell voltage drops low or eventually down to zero without the intervention of a blocking diode, Relay RY200, being acted upon by Battery B100 voltage, 1. will still react to skip; 2.or else maintain the 'make', that is, being sucked, when the Battery B100 exhibits a higher voltage, only to skip when later on the discharging takes place such that Battery B100 voltage comes down somewhat to said predetermined level, driving output switch SW100 to closure, as a result, electric potential stored in the Battery B100 is fed as output to the load;
-- Load LD100: comprising essentially loads in the form of optic energy converted from various electric power, or alternatively mechanic, thermal, chemical or acoustic energy converted from electric power, the load may be of autonomous operation mode or alternatively artificially controlled mode, and structured accordingly.

3. Solar Cell and Load Interactive Control System for application in lighting facilities according to Claim 1, whereof the schema comprises:
-- Solar Cell SC100: comprising single crystal, multiple crystal or amorphous something capable of converting optic energy into electric power, serving to convert solar energy into electric power to charge the Battery;
-- Battery B100: comprising cell or storage capacitor capable of at least charging and discharging twice, serving to accept charging from solar cell SC100, and to discharge as output to Load LD100;
-- Solar Cell Output Current Detection Device RY100 and Output Switch SW100 controlled thereby; being mechanic devices, RY100 being a current detection relay to detect the solar cell current output status, by which to drive the output switch SW100, and that in turn to control the operation status of the Battery in relation to the Load LD100, the Output Switch SW100 serving to drive the Battery B100 to effect an output to, or to suspend an output from the load; whereof the operation rationale is such that when the charging current owing to exposure of solar cell SC100 to light incident, into the Battery B100 is greater than that which makes the Current Detector RY100 to a sucking status, then the Current Detector RY100 will function and drive the Output Switch SW100 so that the Battery B100 is broken off the Load; on the contrary when the Solar Cell is not receiving light incident, or the light incident upon same has turned down to the extent such that the current charging upon the Battery B100 way from the Solar Cell SC100 is less than that which suffices to skip the Current Detector RY100, the Current Detector RY100 will then drive the Output Switch SW100 to conduction, so that the Battery B100 becomes established in an ON state in relation to and feeding output to the Load LD100; said Current Detector RY100 and Output Switch SW100 being integrated together or of separate structure, as preferred;
--Output Switch SW100: composed of mechanical or solid state electronic ckts., serving to drive the Battery B100 into effecting an output to or withdrawing output from the Load; also under the premise that the circuit control logic remains unchanged, the Output Switch SW100 may be adapted to further control a solid state or mechanical switch means provided in addition, and of a greater switching capability so as to manifest itself normally open in relation to the Load LD100 when the solar cell SC100 is receiving light incident, but normally closed instead when it is otherwise;
-- Current Split Voltage Limiter VL100: composed of a zener diode or otherwise diode exhibiting a forward bias, other solid state ckt. or mechanical devices, serving to establish an upper limit to the voltage drop formed across both ends of the Current Detector RY100 when the current charging upon the Battery B100 way from the Solar Cell SC100 exceeds a predetermined level, while exhibiting current splitting function at the same time; said Current Split Voltage Limiter VL100 may be installed independently or integral with the Current Detector RY100, and may also be dispensed with where the need does not exist;
-- Load LD100: essentially that which is converted into optic energy from various electric power, or alternatively that which is converted from electric power into mechanic, thermal, chemical or acoustic energy which can be either autonomously operated or artificially operated by relevant installation.

4. Solar Cell and Load Interactive Control System for application in lighting facilities according to Claim 1, whereof the schema comprises:
-- Solar Cell SC100: being single crystal, multiple crystal or amorphous something capable of converting optic energy into electric power, serving to convert solar energy into electric power to charge the Battery;
-- Battery B100: composed of cell or battery capable of charging or discharging for at least twice, meant to accept charging by the solar cell SC100 and to discharge as output fed to the Load LD100;
-- Solar Cell Output Current Testing Impedance ZO: composed of resistors or other elements having linear or non-linear characteristic impedances for serial connection way between solar cell SC100 and Battery B100 on the one hand, way between the Base B of switching crystal Q100 and the Emitter E of same crystal, the Collector C and Emitter E of the switching crystal Q100, firstly made in series with Relay RY200, then altogether paralleling across both ends of solar cell SC100; so that , when charging current passes due to electric power produced by the exposure of Solar Cell SC100 to light incident, a corresponding voltage drop will be produced VBE across both ends of the current testing impedance ZO, by which to drive the switching crystal Q100 into conduction, so that Relay RY200 is made(sucked) and the Output Switch SW100 is brought to an open ckt condition; while on the contrary when the light incident upon the solar cell SC100 is dwindled or when the solar cell is not being exposed to light incident the charging current will dwindle in like measure or suspend, such that the voltage drop VBE across the current testing impedance ZO is reduced or diminished eventually to zero, thereby cutting off the switching crystal, while the Relay RY200 in series with the switching crystal Q100 skips so that the output switch SW100 controlled thereby is set to closure, resulting eventually in an output of electric power coming from the Battery B100 to the Load LD100;
Afore-mentioned Relay RY200 and output switch SW100 being integrated together or separately structured;
-- Output Switch SW100: comprising electra-mechanic or solid state electronic ckt., serving to drive the Battery B100 into effecting an output to, or alternatively an suspension of output from the load; in addition, under the premise that the ckt. control logic remains unchanged, the same output switch SW100 may be adapted to further control a solid state or mechanical switching means of a greater switching capability to be provided additionally, so as to manifest itself in a normally open ckt. condition in relation to the Load LD100 when the solar cell SC100 is receiving light incident, or alternatively in a normally closed ckt. condition when the solar cell SC100 is not receiving any light incident;
-- Split Current Voltage Limiter VL100: in the form of a zener diode a forwardly biased diode or other solid state electronic ckt. or device, to establish an upper limit to the voltage drop prevailing across both ends of the current testing impedance ZO when the current charged to the Battery B100 way from the solar cell SC100 exceeds a predetermined level, thereby accounting for a current splitting effect; such a current splitting voltage limiter VL100 can be installed independently or integral with the current testing device RY100, or still be dispensed with where there does not exist a need for it.

5. Solar Cell and Load Interactive Control System for application in lighting facilities according to Claim 1, whereof the schema comprises:
-- Solar Cell SC100: one which is either single crystal, multiple crystal or amorphous something capable of converting optic energy into electric power, for converting solar energy into electric power to charge the Battery;
-- Battery B100: composed of one of a variety of cell or storage capacitor capable of charging or discharging at least twice, meant to accept charging by the solar cell SC100, and to discharge as output fed to the Load LD100;
--Solar Cell Output Current Testing Impedance ZO: composed of resistor or other elements having linear or non-linear characteristic impedances, in series way between the solar cell SC100 and the Battery B100, with both ends paralleled across the input terminals of a photo-emitting diode which is part of the photo-coupler PC100;
-- Output Switch SW100: in the form of solid state output switching device Q700, Q701, incorporating single crystal or Darlingto switch ckt. composed of NPN or PNP switching chips or MOSFET, with a control resistor R700 being in series way between the power supply to which the collector C is attached and the Control Base B so that the solid state switch is set normally conductive, way between the Base B of Q701 and the Emitter E of Q700 there is paralleled a photo-coupler PC100 integral with the output terminal of a photo-controlled transistor; when the Solar Cell generates upon exposure to light incident, the output current will pass the current testing impedance ZO and develop a voltage drop across both ends of said impedance ZO, once said voltage drop exceeds the working voltage of the photo-emitting diode on the input end of the photo-coupler PC100, said photo-emitting diode will illuminate to render the transistor on the output end conductive, that in turn compelling the solid state switch Q700 and Q701 into cutoff state, whereupon the Load LD100 remains non-conductive, meantime solar cell SC100 charges with respect to the Battery B100; whereas on the contrary, when the light incident upon the solar cell SC100 is dwindled or that it becomes blind, current passing the current testing impedance ZO will then get diminished or reduced to zero, meantime the voltage drop developed across both ends of the current testing impedance will likewise downgrade or become eventually reduced to zero, as a result the photo-emitting diode on the output terminal of the photo-coupler PC100 abstains from illumination, and that with the effect that the photo transistor on the same output end of the photo-coupler PC100 gets cutoff, to follow that, the solid state switch Q700 and Q701 are brought in conduction, the Battery B100 in communication with the Load LD100; in addition, under the premise that the ckt. control logic remains unchanged, the output switch SW100 may be adapted to assume control of a solid state or mechanical switching means of a greater switching capability provided additionally so as to manifest itself in a normally open ckt. condition relative to the load when the solar cell SC100 is receiving light incident, or alternatively in a normally open ckt. condition relative to the same Load LD100 when the solar cell SC100 is not receiving any light incident;
-- Current Splitting Voltage Limiter VL100: in the form of a zener diode, or a diode having forward bias, or other solid state electronic ckt. or mechanical device, serving to establish an upper limit to the voltage drop established across both ends of the current testing impedance ZO when the current being charged to the Battery B100 way from the solar cell SC100 exceeds a predetermined value, meantime exhibiting a current splitting effect; the current splitting voltage limiter VL100 being an independent installation or structurally integral with the Current Testing Impedance ZO, or still it may be omitted if not being a requisite in the ckts;
-- Load LD100: being such one as to being able to convert a variety of electric power into optic energy, but equally capable of converting electric power into thermal, chemical, mechanical, or acoustic energy, either autonomously operated or artificially operated by relevant control and switching means.

6. A solar cell for lighting a lamp and a loading interactive control system, wherein the output status of the solar cell responsive to incident light serves as the basis for detection of ambient brightness, and that, in turn, serves to control operation of the lamp by a battery, such that, while the solar cell is receiving incident light, the battery will accept charging without releasing an output; and, while the solar light is not receiving incident light, the battery reverts to an output-releasing, charging-suspended high impedance state.
